# DEMANDE DE BREVET EUROPEEN

(11) **EP 3 995 907 A1**
(43) Date de publication de la demande: **11.05.2022**
(21) Numéro de dépôt: 20205990.3
(22) Date de dépôt: 05.11.2020
(51) Int. Cl.: G04G 17/04, A44C 5/00, G04G 17/06

(54) **MONTRE-BRACELET À AFFICHEUR GLISSANT**

(71) Demandeur: The Swatch Group Research and Development Ltd, 2074 Marin (CH)
(72) Inventeur: TORTORA, M. Pierpasquale, 2000 Neuchâtel (CH)
(74) Mandataire: ICB SA

(57) **Abrégé**

La présente invention concerne une montre (400) ou une montre en kit (400), bijou (400) et/ou bijou en kit (400) comprenant au moins un bracelet intelligent (200) configuré pour traiter des données (201) et pour fournir des données traitées (101) à au moins un écran intelligent (100) configuré pour être disposé et/ou se déplacer le long dudit au moins un bracelet intelligent (200) tout en permettant un affichage desdites données traitées (101).

## Description

### Domaine technique

La présente invention concerne le domaine des montres à afficheur glissant et plus particulièrement celui des écrans intelligents et des bracelets intelligents.

### Arrière-plan technologique

Les montres sont généralement constituées d'un bracelet relié à une carrure comportant un mouvement électronique. Toutefois, ces carrures peuvent gêner l'utilisateur de la montre en fonction de sa morphologie d'une part et d'autre part, lors du portage, le mouvement électronique, affichant l'heure par exemple, se trouve généralement entre le radius et l'ulna.

Dans cette position, l'utilisateur ne voit pas l'affichage est doit imposer une torsion à son avant-bras afin de percevoir l'affichage. Cette torsion peut se révéler particulièrement douloureuse lorsque l'utilisateur a une douleur à l'épaule ou au coude par exemple.

Malheureusement, soit en raison du fermoir soit en raison de la dimension du mouvement électronique, la montre ne peut se trouver que sur la partie supérieure ou inférieure du bras avant, et il est donc impossible de déplacer le mouvement électronique dans une position intermédiaire afin de faciliter sa visualisation.

### Résumé de l'invention

La présente invention se propose de résoudre tout ou partie des inconvénient grâce à un écran intelligent configuré pour coopérer avec au moins un bracelet intelligent ; ledit écran intelligent étant configuré pour être disposé et/ou se déplacer le long dudit au moins un bracelet intelligent et comprenant au moins un afficheur, au moins ;
- Un récepteur : ledit au moins un récepteur étant configuré pour recevoir des données traitées ; et,
- Une unité de commande ; ladite au moins une unité de commande étant configurée pour commander ledit afficheur en fonction desdites données traitées.

Grâce à cette disposition, ledit écran intelligent peut coopérer avec ledit au moins un bracelet intelligent en se déplaçant le long dudit au moins un bracelet intelligent et tout en affichant lesdites données traitées.

Selon un mode de réalisation, ledit écran intelligent comprenant au moins un organe de glissement configuré pour glisser le long dudit au moins un bracelet intelligent.

Selon un mode de réalisation, ledit écran intelligent comprend au moins un organe de coulissement configuré pour coulisser le long dudit au moins un bracelet intelligent.

Selon un mode de réalisation, ledit écran intelligent comprend au moins un palier configuré pour coulisser et/ou glisser le long dudit au moins un bracelet intelligent.

Grâce à l'une ou l'autre de ces dispositions précédentes, ledit écran intelligent peut glisser et/ou coulisser le long dudit au moins un bracelet intelligent.

Selon un mode de réalisation, ledit écran intelligent comprenant au moins une première interface de communication configurée pour coopérer avec au moins une deuxième interface de communication et pour transférer desdites données traitées audit moins un récepteur.

Grâce à cette disposition, lesdites données traitées peuvent être transférées entre ledit écran intelligent et ledit au moins un bracelet intelligent, de préférence lesdites données traitées peuvent être transférées entre ladite au moins une première interface de communication et ladite au moins une deuxième interface de communication.

Selon un mode de réalisation, ledit au moins un récepteur comprend au moins un récepteur radiofréquence, au moins un récepteur à ultrason, au moins un récepteur inductif, au moins un récepteur électrique et/ou au moins un récepteur optique.

Grâce à cette disposition, ledit au moins un récepteur reçoit lesdites données traitées soit par signaux radiofréquences, soit par signaux ultrasoniques, soit par signaux inductifs, soit par signaux de courant, soit par signaux tension et/ou soit par signaux lumineux.

La présente invention se propose de résoudre tout ou partie des inconvénient grâce à une pierre précieuse ou de synthèse et/ou pièce de joaillerie comprenant au moins un écran intelligent selon un mode réalisation de l'invention.

La présente invention se propose de résoudre tout ou partie des inconvénient grâce à un bracelet intelligent configuré pour coopérer avec au moins un écran intelligent selon un mode réalisation de l'invention ou pierre précieuse ou de synthèse et/ou pièce de joaillerie selon un mode réalisation de l'invention ; ledit bracelet intelligent comprenant au moins un bracelet et au moins :
- Une unité de traitement ; ladite au moins une unité de traitement étant configurée pour traiter des données et pour fournir des données traitées ; et,
- Un transmetteur ; ledit au moins un transmetteur étant configuré pour transmettre lesdites données traitées.

Grâce à cette disposition, ledit bracelet intelligent peut coopérer avec ledit au moins un écran intelligent lorsque ledit au moins un écran intelligent (100) se déplace le long dudit au moins un bracelet intelligent et tout en fournissant lesdites données traitées.

Selon un mode de réalisation, ledit bracelet intelligent comprenant au moins un guide et au moins une deuxième interface de communication ; ledit au moins un guide étant configuré pour guider lesdites données traitées le long dudit au moins un bracelet au moins jusqu'audit moins un écran intelligent et/ou jusqu'à ladite au moins une pierre précieuse ou de synthèse et/ou pièce de joaillerie via ladite au moins une deuxième interface de communication, de préférence jusqu'au moins une première interface de communication.

Selon un mode de réalisation, ledit au moins un guide étant configuré pour guider lesdites données traitées le long dudit au moins un bracelet au moins jusqu'audit moins un écran intelligent ; lesdites données traitées étant transférées de ladite au moins une deuxième interface de communication et au moins un écran intelligent de préférence via au moins une première interface de communication.

Grâce à l'une ou l'autre de ces dispositions précédentes, lesdites données traitées peuvent être transférées entre ledit écran intelligent et ledit au moins un bracelet intelligent, de préférence lesdites données traitées peuvent être transférées entre ladite au moins une deuxième interface de communication et ladite au moins une première interface de communication.

Selon un mode de réalisation, ledit au moins un bracelet comprend ledit au moins un guide, de préférence, ledit au moins un bracelet intègre ledit au moins un guide.

Grâce à cette disposition, ledit au moins un guide n'apparait pas.

Selon un mode de réalisation, ladite au moins une deuxième interface de communication est configurée pour être en contact avec au moins une première interface de communication et/ou avec au moins un écran intelligent et/ou avec au moins une pierre précieuse ou de synthèse et/ou pièce de joaillerie.

Grâce à cette disposition, lesdites données traitées peuvent être transférées entre ladite au moins une deuxième interface de communication et ladite au moins une première interface de communication.

Selon un mode de réalisation, ladite au moins une deuxième interface de communication comprend au moins une interface de contact électrique, au moins une interface transparente et/ou au moins une interface translucide.

Selon un mode de réalisation, ledit au moins un guide comprend au moins un guide d'onde électromagnétique, au moins un guide d'onde acoustique, au moins un conducteur électrique et/ou au moins une fibre optique.

Selon un mode de réalisation, ledit au moins un transmetteur comprend au moins un transmetteur radiofréquence, au moins un transmetteur à ultrason, au moins un transmetteur inductif, au moins un transmetteur électrique et/ou au moins un transmetteur optique.

Grâce à l'une ou l'autre de ces dispositions précédentes, lesdites données traitées peuvent être guider jusqu'audit au moins un écran intelligent par onde électromagnétique, acoustique, par signaux électriques et/ou par signaux optique.

La présente invention se propose de résoudre tout ou partie des inconvénient grâce à une montre, montre en kit, bijou ou bijou en kit comprenant au moins un bracelet intelligent selon un mode de réalisation de l'invention, et au moins un écran intelligent selon un mode de réalisation de l'invention et/ou pierre précieuse ou de synthèse et/ou pièce de joaillerie selon un mode de réalisation de l'invention ; ledit au moins un écran intelligent étant configuré pour être disposé et/ou se déplacer le long dudit au moins un bracelet intelligent et/ou pierre précieuse ou de synthèse et/ou pièce de joaillerie étant configurée pour être disposée et/ou se déplacer le long dudit au moins un bracelet intelligent.

Grâce à cette disposition, il est possible d'agencer au moins un écran intelligent avec au moins un bracelet intelligent de sorte à former une montre bracelet.

La présente invention se propose de résoudre tout ou partie des inconvénient grâce à un procédé de communication pour une montre en kit selon un mode de réalisation de l'invention ou entre un ensemble d'au moins un bracelet intelligent comprenant au moins un bracelet intelligent selon un mode de réalisation de l'invention, un ensemble d'au moins un écran intelligent comprenant au moins un écran intelligent selon un mode de réalisation de l'invention, et/ou un ensemble d'au moins une pierre précieuse ou de synthèse et/ou pièce de joaillerie comprenant au moins une pierre précieuse ou de synthèse et/ou pièce de joaillerie selon un mode de réalisation de l'invention, et/ou de dit au moins une pierre précieuse ou de synthèse et/ou pièce de joaillerie dudit ensemble d'au moins une pierre précieuse ou de synthèse et/ou pièce de joaillerie ; ledit procédé de communication comprenant au moins ;
- Une indication du nombre de dit au moins un bracelet intelligent dudit ensemble d'au moins un bracelet intelligent, de dit au moins un écran intelligent dudit ensemble d'au moins un écran intelligent ; et,
- Une répartition desdites données à traiter et/ou desdites données traitées entre ledit ensemble d'au moins un bracelet intelligent, ledit ensemble d'au moins un écran intelligent et/ou ledit ensemble d'au moins une pierre précieuse ou de synthèse et/ou pièce de joaillerie.

Grâce à cette disposition, il est possible d'agencer au moins un écran intelligent avec au moins un bracelet intelligent de sorte à former une montre bracelet et de répartir lesdites données à traiter entre lesdits au moins un bracelet intelligent et/ou lesdites données traitées entre lesdits au moins un écran intelligent.

La présente invention se propose de résoudre tout ou partie des inconvénient grâce à un groupement de données traitées transféré entre au moins un bracelet intelligent selon un mode de réalisation de l'invention, au moins un écran intelligent selon un mode de réalisation de l'invention et/ou au moins une pierre précieuse ou de synthèse et/ou pièce de joaillerie selon un mode de réalisation de l'invention comprenant au moins une adresse et au moins une donnée traitée.

Grâce à cette disposition, ledit au moins un bracelet intelligent peut communiquer avec au moins un écran intelligent.

### Brève description des figures

L'invention sera décrite ci-après de manière plus détaillée à l'aide des dessins annexés, donnés à titre d'exemples nullement limitatifs, dans lesquels :
- La figure 1 illustre une montre ou montre en kit comprenant au moins un bracelet intelligent **200** selon un mode de réalisation de l'invention, et au moins un écran intelligent **100** selon un mode de réalisation de l'invention ;
- La figure 2 représente ledit bracelet intelligent **200** coopérant avec ledit au moins un écran intelligent **100** lorsque ledit au moins un écran intelligent **100** se déplace le long dudit au moins un bracelet intelligent **200** et tout en fournissant lesdites données traitées **101** ; et,
- La figure 3 montre un procédé de communication (500) selon un mode de réalisation de l'invention.

### Description détaillée de l'invention

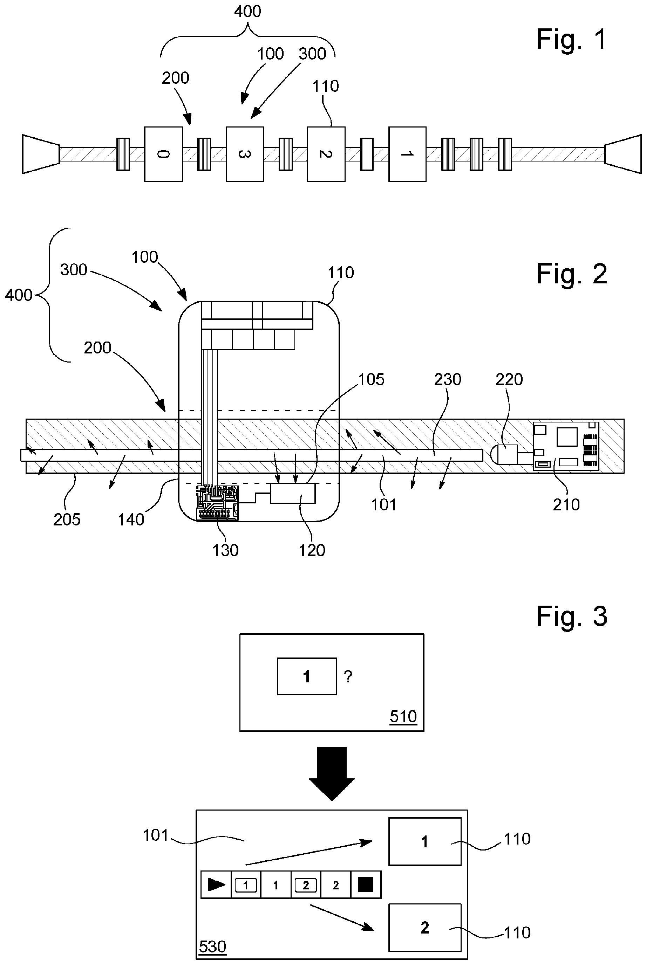

Comme le montre la figure 1, la présente invention peut se présenter sous la forme d'une montre **400** ou d'une montre en kit **400,** d'un bijou **400** et/ou d'un bijou en kit **400** comprenant au moins un bracelet intelligent **200,** au moins un écran intelligent **100,** et/ou pierre précieuse ou de synthèse et/ou pièce de joaillerie **300.** Le reste de la description détaillée de l'invention sera essentiellement basé sur ladite montre **400** ou ladite montre en kit **400** et ledit au moins un écran intelligent **100** pour des raisons de lisibilité. Toutefois, l'homme du métier comprend que cette description s'applique mutatis mutandis à une montre bijou **400,** à une montre bijou en kit **400,** audit bijou **400** ou audit bijou en kit **400** comprenant au moins un bracelet intelligent **200** et au moins une pierre précieuse ou de synthèse et/ou pièce de joaillerie **300** selon un mode de réalisation de l'invention présentée ci-après.

Ledit au moins un écran intelligent **100** peut être disposé sur ledit au moins un bracelet intelligent **200** et l'utilisateur peut déplacer ledit au moins un écran intelligent **100** le long dudit au moins un bracelet intelligent **200** afin d'agencer ledit au moins un écran intelligent **100** sur ledit au moins un bracelet intelligent **200** dans une position confortable.

Par ailleurs, il est totalement envisageable, par exemple, de disposer des objets décoratifs avant et/ou après ledit au moins un écran intelligent **100** comme cela est exposé sur la figure 1.

Comme mentionné, ledit au moins un écran intelligent **100** peut coopérer avec ledit au moins un bracelet intelligent **200.** Cette coopération est schématisée sur la figure 2 et montre **400** une vue en coupe dudit au moins un écran intelligent **100.**

Comme cela est visible sur la figure 2, ledit au moins un bracelet intelligent **200** comprend au moins un bracelet **202,** au moins une unité de traitement **210** configurée pour traiter des données **201** et pour fournir des données traitées **101** et au moins un transmetteur **220** configuré pour transmettre lesdites données traitées **101.** Ledit au moins un transmetteur **220,** mentionné ci-avant, peut se présenter sous la forme d'au moins un transmetteur radiofréquence **220,** d'au moins un transmetteur à ultrason **220,** d'au moins un transmetteur inductif **220,** d'au moins un transmetteur électrique **220** et/ou d'au moins un transmetteur optique **220,** de sorte que lesdites données traitées **101** peuvent être guidées jusqu'audit au moins un écran intelligent **100** par onde électromagnétique, acoustique, par signaux électriques et/ou par signaux optiques.

Pour permettre ce guidage, ledit au moins un bracelet **202** comprend au moins une deuxième interface de communication **205** et au moins un guide **230,** pouvant être intégré ou dissimulé dans ledit au moins un bracelet **202,** éventuellement en matériau synthétique et/ou naturel afin de faciliter la coopération avec ledit au moins un écran intelligent **100,** et pour guider lesdites données traitées **101** le long dudit au moins un bracelet **202** au moins jusqu'audit au moins un écran intelligent **100** via ladite au moins une deuxième interface de communication **205,** de préférence jusqu'au moins une première interface de communication **105.**

Selon les modes de réalisation, ladite au moins une deuxième interface de communication **205** peut se présenter sous au moins une interface de contact électrique, sous au moins une interface transparente et/ou sous au moins une interface translucide et ledit au moins un guide **230** peut guider lesdites données traitées **101** via au moins un guide d'onde **230** électromagnétique, au moins un guide d'onde acoustique **230,** au moins un conducteur électrique **230** et/ou au moins une fibre optique **230** afin de communiquer lesdites données traitées **101** jusqu'audit au moins un écran intelligent **100** par onde électromagnétique, acoustique, par signaux électriques et/ou par signaux optiques, via ladite moins une première interface de communication **105.**

Cette dernière, c'est-à-dire ladite au moins une première interface de communication **105** est comprise par ledit au moins un écran intelligent **100** et peut coopérer avec ladite au moins une deuxième interface de communication **205** pour transférer desdites données traitées **101** audit moins un récepteur **120** par exemple. Ainsi, lesdites données traitées **101** peuvent être transférées entre ledit au moins un écran intelligent **100** et ledit au moins un bracelet intelligent **200,** de préférence lesdites données traitées **101** peuvent être transférées entre ladite au moins une première interface de communication **105** et ladite au moins une deuxième interface de communication **205.**

En effet, ledit au moins un guide **230** peut guider lesdites données traitées **101** le long dudit au moins un bracelet **202** au moins jusqu'audit moins un écran intelligent **100,** plus particulièrement, lesdites données traitées **101** étant transférées de ladite au moins une deuxième interface de communication **205** et au moins un écran intelligent **100** de préférence via au moins une première interface de communication **105.** En effet, ladite au moins une deuxième interface de communication **205** peut être en contact avec ladite au moins une première interface de communication **105** et/ou avec ledit au moins un écran intelligent **100,** comme cela est représenté sur la figue 2, de sorte que lesdites données traitées **101** puissent être transférées entre ladite au moins une deuxième interface de communication **205** et ladite au moins une première interface de communication **105.**

Ledit au moins un écran intelligent **100,** quant à lui, comprend au moins un afficheur **110,** au moins un récepteur **120** configuré pour recevoir des données traitées **101** et au moins une unité de commande **130** configurée pour commander ledit afficheur **110** en fonction desdites données traitées **101.** Comme mentionné en amont, la présente invention peut se présenter sous la forme d'une pierre précieuse ou de synthèse et/ou pièce de joaillerie **300** comprenant ledit au moins un écran intelligent **100.** Ainsi, à la différence dudit au moins un écran intelligent **100,** ladite pierre précieuse ou de synthèse et/ou pièce de joaillerie **300** permet grâce à l'agencement proposé d'afficher ponctuellement une information liée auxdites données traitées **101,** et lorsqu'aucune information n'est affichée, ladite pierre précieuse ou de synthèse et/ou pièce de joaillerie **300** donne l'apparence d'une montre bijou **400** élégante ou d'un bijou **400** élégant au poignet, avec des éléments de décoration **299.**

Ledit au moins un récepteur **120** peut comprendre au moins un récepteur radiofréquence **120,** au moins un récepteur à ultrason **120,** au moins un récepteur inductif **120,** au moins un récepteur électrique **120** et/ou au moins un récepteur optique **120,** de sorte que ledit au moins un récepteur **120** reçoit lesdites données traitées **101** soit par signaux radiofréquences, soit par signaux ultrasoniques, soit par signaux inductifs, soit par signaux de courant, soit par signaux tension et/ou soit par signaux lumineux.

Une fois inséré sur ledit au moins un bracelet intelligent **200,** ledit au moins un écran intelligent **100** peut glisser le long dudit au moins un bracelet intelligent **200** par l'intermédiaire d'au moins un organe de glissement **140** compris par ledit au moins un bracelet intelligent **200.** Il est également possible de prévoir au moins un organe de coulissement **140** pour permettre le coulissement dudit au moins un écran intelligent **100** le long dudit au moins un bracelet intelligent **200** et/ou au moins un palier pour permettre le coulissement et/ou le glissement dudit au moins un écran intelligent **100** le long dudit au moins un bracelet intelligent **200.**

Comme susmentionné, il est possible de prévoir un ensemble de dit au moins un écran intelligent **100** comprenant au moins un écran intelligent **100** sur ledit au moins un bracelet intelligent **200** ou sur un ensemble de dit au moins un bracelet intelligent **200** comprenant au moins un bracelet intelligent **200.** À cet effet, un procédé de communication **500** permet audit moins un bracelet intelligent **200** de communiquer avec ledit au moins un écran intelligent **100.** Pour ce faire, ledit procédé de communication **500** comprend au moins une étape d'indication **510** du nombre de dit au moins un bracelet intelligent **200** dans ledit ensemble de dit au moins un bracelet intelligent **200** et/ou de dit au moins un écran intelligent **100.** Une fois le nombre indiqué, au moins une étape de répartition **530** desdites données **201** à traiter et/ou desdites données traitées **101** entre ledit au moins un bracelet intelligent **200** et/ou ledit au moins un écran intelligent **100** est réalisée, de sorte que une montre bracelet **202,** c'est-à-dire ledit au moins un écran intelligent **100** avec ledit au moins un bracelet intelligent **200** puisse répartir lesdites données à traiter entre lesdits au moins un bracelet intelligent **200** et/ou lesdites données traitées **101** entre lesdits au moins un écran intelligent **100.** Lesdites données traitées **101** peuvent se présenter sous un groupement **600** de données traitées, qui est transféré entre ledit ou lesdits au moins un bracelet intelligent **200** et/ou entre ledit ou lesdits au moins un écran intelligent **100,** et comprend au moins une adresse **121** et au moins une donnée traitée de sorte à faciliter la communication entre ledit ou lesdits au moins un bracelet intelligent **200** avec ledit ou lesdits au moins un écran intelligent **100.**

Ainsi ledit groupement **600** de données traitées et/ou lesdites données traitées **101** est distribué au moins un écran intelligent **100** ou audit ensemble de dit au moins un écran intelligent **100** qui peut se déplacer sur ledit ensemble de dit au moins un bracelet intelligent **200** ou sur au moins un bracelet intelligent **200.** Dès lors, ledit groupement **600** de données traitées est centralisé et/ou lesdites données traitées **101** sont centralisées et il est réparti ou elles sont réparties sur ledit ensemble de dit au moins un écran intelligent **100.**

Un algorithme de multiplexage ou ledit procédé de communication **500** est prévu pour faire que lesdites données traitées **101** soient adressées à au moins un écran intelligent **100.** Pour cela, ledit groupement **600** de données traitées peut par exemple être structuré en trois parties. Une première partie active au moins un écran intelligent **100** dudit ensemble dudit au moins un écran intelligent **100,** une deuxième partie comprend une donnée relative à l'heure par exemple et la troisième partie indique la fin dudit groupement **600** de données et met en veille ledit ensemble au moins un écran intelligent **100.**

Ladite au moins une unité de traitement **210,** permettant de calculer l'heure et/ou la date, est intégrée dans ledit au moins un bracelet **202.**

## Revendications

1. Écran intelligent (100) configuré pour coopérer avec au moins un bracelet intelligent (200) ; ledit écran intelligent (100) étant configuré pour être disposé et/ou se déplacer le long dudit au moins un bracelet intelligent (200) et comprenant au moins un afficheur (110), au moins ;
- Un récepteur (120) : ledit au moins un récepteur (120) étant configuré pour recevoir des données traitées (101) ; et,
- Une unité de commande (130) ; ladite au moins une unité de commande (130) étant configurée pour commander ledit afficheur (110) en fonction desdites données traitées (101).

2. Écran intelligent (100) selon la revendication 1, lequel comprenant au moins un organe de glissement (140) configuré pour glisser le long dudit au moins un bracelet intelligent (200).

3. Écran intelligent (100) selon la revendication 1 ou 2, lequel comprenant au moins une première interface de communication (105) configurée pour coopérer avec au moins une deuxième interface de communication (205) et pour transférer desdites données traitées (101) audit moins un récepteur (120).

4. Écran intelligent (100) selon l'une quelconque des revendications précédentes, dans lequel ledit au moins un récepteur (120) comprend au moins un récepteur radiofréquence (120), au moins un récepteur à ultrason (120), au moins un récepteur inductif (120), au moins un récepteur électrique (120) et/ou au moins un récepteur optique (120).

5. Pierre précieuse ou de synthèse et/ou pièce de joaillerie (300) comprenant au moins un écran intelligent (100) selon l'une quelconque des revendications précédentes 1 à 4.

6. Bracelet intelligent (200) configuré pour coopérer avec au moins un écran intelligent (100) selon l'une quelconque des revendications 1 à 4 ou pierre précieuse ou de synthèse et/ou pièce de joaillerie (300) selon la revendication 5 ; ledit bracelet intelligent (200) comprenant au moins un bracelet (202) et au moins :
- Une unité de traitement (210) ; ladite au moins une unité de traitement (210) étant configurée pour traiter des données (201) et pour fournir des données traitées (101) ; et,
- Un transmetteur (220) ; ledit au moins un transmetteur (220) étant configuré pour transmettre lesdites données traitées (101).

7. Bracelet intelligent (200) selon la revendication 6, lequel comprenant au moins un guide (230) et au moins une deuxième interface de communication (205) ; ledit au moins un guide (230) étant configuré pour guider (230) lesdites données traitées (101) le long dudit au moins un bracelet (202) au moins jusqu'audit moins un écran intelligent (100) et/ou jusqu'à ladite au moins une pierre précieuse ou de synthèse et/ou pièce de joaillerie (300) via ladite au moins une deuxième interface de communication (205), de préférence jusqu'au moins une première interface de communication (105).

8. Bracelet intelligent (200) selon la revendication 7, dans lequel ledit au moins un bracelet (202) comprend ledit au moins un guide (230), de préférence, ledit au moins un bracelet (202) intègre ledit au moins un guide (230).

9. Bracelet intelligent (200) selon la revendication 7 ou 8, dans lequel ladite au moins une deuxième interface de communication (205) est configurée pour être en contact avec au moins une première interface de communication (105) , avec au moins un écran intelligent (100) et/ou avec au moins une pierre précieuse ou de synthèse et/ou pièce de joaillerie (300).

10. Bracelet intelligent (200) selon l'une quelconque des revendications précédentes, dans lequel ledit au moins un guide (230) comprend au moins un guide d'onde (230) électromagnétique, au moins un guide d'onde acoustique (230), au moins un conducteur électrique (230) et/ou au moins une fibre optique (230).

11. Bracelet intelligent (200) selon l'une quelconque des revendications précédentes, dans lequel ledit au moins un transmetteur (220) comprend au moins un transmetteur radiofréquence (220), au moins un transmetteur à ultrason (220), au moins un transmetteur inductif (220), au moins un transmetteur électrique (220) et/ou au moins un transmetteur optique (220).

12. Montre (400), montre en kit (400), bijou (400) et/ou bijou en kit (400) comprenant au moins un bracelet intelligent (200) selon l'une quelconque des revendications 6 à 11, au moins un écran intelligent (100) selon l'une quelconque des revendications 1 à 4 et/ou pierre précieuse ou de synthèse et/ou pièce de joaillerie (300) ; ledit au moins un écran intelligent (100) étant configuré pour être disposé et/ou se déplacer le long dudit au moins un bracelet intelligent (200) et/ou pierre précieuse ou de synthèse et/ou pièce de joaillerie (300) étant configurée pour être disposée et/ou se déplacer le long dudit au moins un bracelet intelligent (200).

13. Procédé de communication (500) pour une montre en kit (400) et/ou bijou en kit (400) selon la revendication 11 ou entre un ensemble d'au moins un bracelet intelligent (200) comprenant au moins un bracelet intelligent (200) selon l'une quelconque des revendications 6 à 11, un ensemble d'au moins un écran intelligent (100) comprenant au moins un écran intelligent (100) selon l'une quelconque des revendications 1 à 4 et/ou un ensemble d'au moins une pierre précieuse ou de synthèse et/ou pièce de joaillerie (300) comprenant au moins une pierre précieuse ou de synthèse et/ou pièce de joaillerie (300) selon la revendication 5 ; ledit procédé de communication (500) comprenant au moins ;
- Une indication (510) du nombre de dit au moins un bracelet intelligent (200) dudit ensemble d'au moins un bracelet intelligent (200), de dit au moins un écran intelligent (100) dudit ensemble d'au moins un écran intelligent (100), et/ou de dit au moins une pierre précieuse ou de synthèse et/ou pièce de joaillerie (300) dudit ensemble d'au moins une pierre précieuse ou de synthèse et/ou pièce de joaillerie (300) ; et,
- Une répartition (530) desdites données (201) à traiter et/ou desdites données traitées (101) entre ledit ensemble d'au moins un bracelet intelligent (200), ledit ensemble d'au moins un écran intelligent (100) et/ou ledit ensemble d'au moins une pierre précieuse ou de synthèse et/ou pièce de joaillerie (300).

14. Groupement (600) de données traitées (101) transféré entre au moins un bracelet intelligent (200) selon l'une quelconque des revendications 6 à 11, au moins un écran intelligent (100) selon l'une quelconque des revendications 1 à 4 et/ou au moins une pierre précieuse ou de synthèse et/ou pièce de joaillerie (300) selon la revendication 5 comprenant au moins une adresse (121) et au moins une donnée traitée.
